# EUROPÄISCHE PATENTSCHRIFT

(11) **EP 0 778 428 B1**
(45) Veröffentlichungstag und Bekanntmachung des Hinweises auf die Patenterteilung: **31.03.1999**
(21) Anmeldenummer: 96117943.9
(22) Anmeldetag: 08.11.1996
(51) Int. Cl.: F16H 57/05, F16H 7/18

(54) **Kettenführungs- und Gleitschiene, insbesondere für Brennkraftmaschinen**
Chain guide and slide for motor vehicles
Guide-chaîne à glissière pour véhicules automobiles

(30) Priorität: 17.11.1995 DE 19542861
(43) Veröffentlichungstag der Anmeldung: 11.06.1997
(73) Patentinhaber: Ford Global Technologies, Inc., Dearborn, Michigan 48126-2490 (US)
(72) Erfinder: Metz, Hans-Walter, 50259 Pulheim (DE); Ley, Matthias, 51371 Leverkusen (DE)
(74) Vertreter: Messulam, Alec Moses

(56) Entgegenhaltungen:
- EP-A- 0 279 934
- DE-A- 2 323 895
- US-A- 1 998 682
- US-A- 2 355 003

## Beschreibung

Die Erfindung bezieht sich auf eine Kettenführungs- und Gleitschiene, insbesondere für Brennkraftmaschinen zum Führen und Spannen von Ketten, wie z.B. von Steuerwellenantrieben, wobei die Gleitschiene aus einem metallischen Träger mit einer Kunststoffauflage oder vollständig aus Kunststoffmaterial besteht, das im Bereich der Kettenauflage unmittelbar die Gleitoberfläche bildet oder ggf. mit einem Gleitbelag aus einem anderen Kunststoffmaterial versehen ist.

Aus der US-A-1 998 682 ist eine Kettenführungs- und -gleitschiene bekannt, bei der die die Kettenauflage bildende Oberfläche der Gleitschiene mit einer Vielzahl von Schmieröltaschen versehen ist, die symmetrisch oder asymmetrisch angeordnet sind.

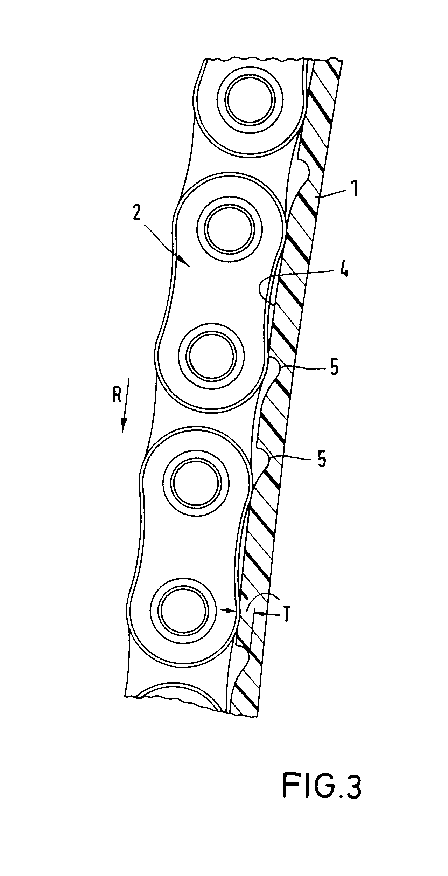

Bei dieser bekannten Kettenführungs- und gleitschiene erstreckt sich die Kettenauflage jedoch nur im Bereich der Kettenrollen (siehe Fig. 3 und 6, Bezugszeichen 40) und dementsprechend sind im Bereich der Kettenlaschenbahnen keine Schmieröltaschen vorhanden.

Eine Kettenführungs- und Gleitschiene, insbesondere für Brennkraftmaschinen der im Oberbegriff des Patentanspruches 1 erläuterten Art ist aus der EP-PS 0 279 934 bekannt.

Bei dieser bekannten Kettenführungs- und Gleitschiene ist im Bereich der Kettenauflage ein besonderer Gleitbelag aus einem anderen Kunststoffmaterial aufgebracht, der die Gleitreibung der Kette in der Kettenführungs- und Gleitschiene herabsetzen soll, wodurch die Reibungsverluste des Kettentriebes und auch der Verschleiß der Kettenführungs- und Gleitschiene herabgesetzt wird.

Die bekannte Kettenführungs- und Gleitschiene weist jedoch den Nachteil auf, daß deren Herstellung durch die Verwendung der unterschiedlichen Kunststoffmaterialien unverhältnismäßig aufwendig ist.

Die Aufgabe der Erfindung ist es, eine Kettenführungs- und Gleitschiene der im Oberbegriff des Patentanspruches 1 erläuterten Art derart zu verbessern, daß einerseits die Reibung und der Verschleiß innerhalb der Kettenführungs- und Gleitschiene herabgesetzt wird, daß darüber hinaus jedoch auch noch eine Dämpfung der Geräuschentwicklung erzielt wird und dies ohne daß auf ein aufwendiges Herstellungsverfahren zurückgegriffen werden muß.

Gemäß der Erfindung wird diese Aufgabe gelöst, indem eine Kettenführungs- und Gleitschiene, der im Oberbegriff des Patentanspruches 1 erläuterten Art die im Kennzeichenteil des Patentanspruches 1 aufgezeigten Merkmale aufweist.

Dadurch, daß die die Kettenauflage unmittelbar bildende Gleitoberfläche der Gleitschiene mit einer Vielzahl von Schmieröltaschen versehen ist, wird dafür gesorgt, daß in allen Betriebszuständen ausreichendes Schmieröl im Bereich der Kettenführungs- und Gleitschiene vorhanden ist, und zwar in einer solchen Menge, daß nicht nur die Reibung und der Verschleiß herabgesetzt wird, sondern daß darüber hinaus auch das reichlich vorhandene Schmieröl zu einer Dämpfung der Geräuschentwicklung des Kettentriebes beiträgt.

Die Schmieröltaschen sind hierbei vorzugsweise im Bereich der Kettenlaschen angeordnet und sind in Laufrichtung der Kette zueinander symmetrisch oder asymmetrisch versetzt angeordnet.

Die Schmieröltaschen sind vorzugsweise als trapezförmige Ausnehmungen ausgebildet, deren Tiefe und deren Breite in Laufrichtung der Kette hin abnehmend angeordnet sind. Ebenso ist es möglich, jede andere Form der Schmieröltaschen auszubilden, die das Schmieröl aufnehmen und speichern kann.

Insbesondere während der Startphase einer Brennkraftmaschine sorgt das in der Vielzahl von Schmieröl taschen festgehaltene Schmieröl für eine einwandfreie Schmierung der Kette, wenn ansonsten durch das noch nicht erwärmte Schmieröl der Brennkraftmaschine eine vollständige Versorgung aller Bereiche der Brennkraftmaschine unter Umständen nicht gewährleistet ist.

Die Erfindung wird anhand eines in den beigefügten Zeichnungen gezeigten Ausführungsbeispieles näher erläutert. Es zeigt:
- Fig. 1: eine Teilansicht eines Kettentriebes einer Brennkraftmaschine mit im Schnitt gezeigter Kettenführungs- und Gleitschiene;
- Fig. 2: eine Ansicht auf die Kettenführungs- und Gleitschiene in Richtung des Pfeiles II in Fig. 1;
- Fig. 3: eine vergrößerte Darstellung eines Schnittes entlang der Linie III-III in Fig. 2 und
- Fig. 4: eine vergrößerte Darstellung der Ansicht in Fig. 2.

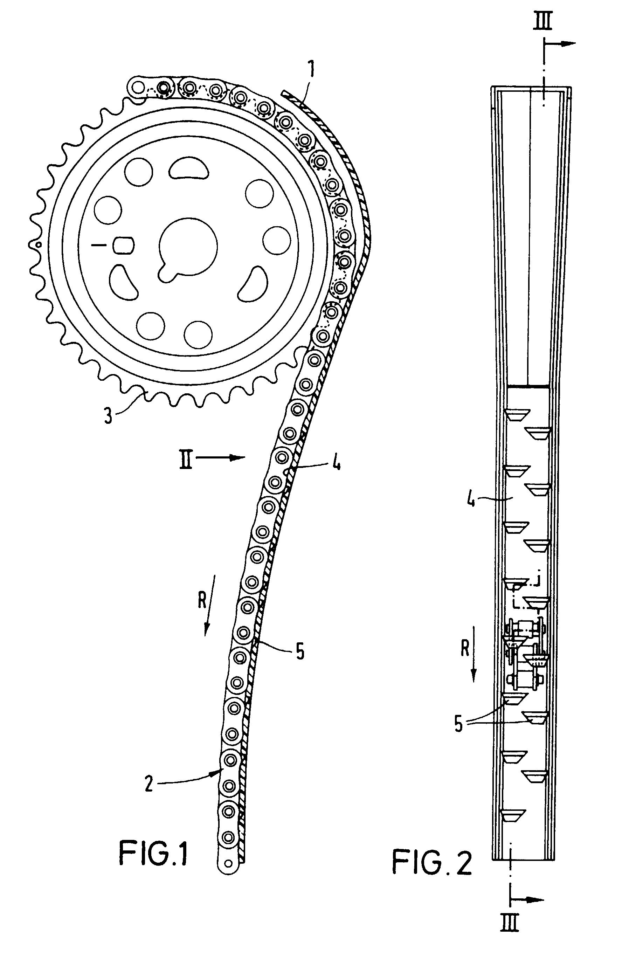

Bei dem in den Figuren nur teilweise gezeigten Kettentrieb einer Brennkraftmaschine ist eine Kettenführungs- und Gleitschiene mit 1, die Kette mit 2 und ein Kettenrad mit 3 bezeichnet. Die Kettenführungs- und Gleitschiene 1 weist an ihrer Kettenauflage 4 eine Vielzahl von Schmieröltaschen 5 auf, die wie aus Fig. 2 ersichtlich ist, im Bereich der Kettenlaschen angeordnet und in Laufrichtung der Kette, siehe Pfeil R, wechselweise zueinander versetzt sind.

In der vergrößerten Darstellung in Fig. 3, die dem Schnittverlauf entspricht, der in Fig. 2 mit III-III angegeben ist, wird ersichtlich, daß die auf der Kettenauflage 4 angeordneten Schmieröltaschen 5 in zwei seitlichen, den Ebenen der Kettenlaschen entsprechenden Ebenen liegen.

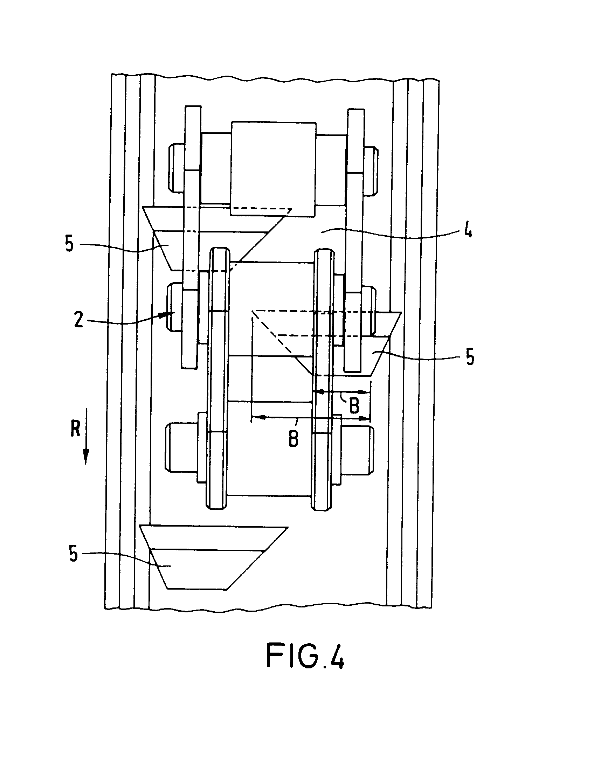

Wie aus Fig. 4 ersichtlich wird, sind die Schmieröltaschen 5 als trapezförmige Ausnehmungen ausgebildet, deren Tiefe T, siehe Fig. 3, und deren Breite B, siehe Fig. 4, in Laufrichtung der Kette, siehe Pfeil R, abnehmend ausgebildet sind.

Dadurch wird Schmieröl, das sich in den Schmieröltaschen 5 angesammelt hat, durch die einlaufenden Rundungen der Kettenlaschen mitgerissen und bildet durch den keilförmigen Auslauf der Schmieröltaschen einen Schmieröl film auf der nachfolgenden Oberfläche der Kettenauflage 4.

Selbstverständlich kann für die Form der Schmieröl taschen eine Vielzahl von unterschiedlichen Formen, wie z.B. kugelkallottenförmige Vertiefungen, gewählt werden, die das Schmieröl aufnehmen und speichernd festhalten.

Das im Bereich der Kettenauflage 4 somit reichlich vorhandene Schmieröl führt zu einer Dämpfung der Geräusche, die ansonsten durch die Gleichförmigkeit eines Kettentriebes verursacht werden.

## Patentansprüche

1. Kettenführungs- und Gleitschiene, insbesondere für Brennkraftmaschinen zum Führen und Spannen von Ketten, wie z.B. von Steuerwellenantrieben, wobei die Gleitschiene (1) aus einem metallischen Träger mit einer Kunststoffauflage oder vollständig aus Kunststoffmaterial besteht und im Bereich der Kettenauflage (4) unmittelbar die Gleitoberfläche bildet oder ggf. mit einem Gleitbelag aus einem anderen Kunststoff- material versehen ist und
- die die Kettenauflage (4) bildende Oberfläche der Gleitschiene (1) mit einer Vielzahl von Schmieröltaschen (5) versehen ist, die symmetrisch oder asymmetrisch angeordnet sind,
**dadurch gekennzeichnet**, daß
- die Schmieröltaschen (5) im Bereich der Kettenlaschenbahnen angeordnet und zueinander in Laufrichtung (R) der Kette (2) versetzt angeordnet sind.

2. Kettenführungs- und Gleitschiene nach Anspruch 1,
**dadurch gekennzeichnet**, daß
- die Schmieröltaschen (5) als trapezförmige Ausnehmungen ausgebildet sind, deren Tiefe (T) und deren Breite (B) in Laufrichtung (R) der Kette (2) abnehmend angeordnet sind.

## Claims

1. A chain guiding and slide rail, particularly for internal combustion engines for guiding and tensioning chains, e.g. of camshaft drives, wherein the slide rail consists of a metallic carrier having a plastics coating or consisting wholly of plastics material and in the chain support region (4) either directly forms the sliding surface or optionally is provided with a sliding coating of another plastics material, and wherein the surface of the slide rail(1) forming the chain support (4) is provided with numerous lubricating oil pockets (5) which are disposed symmetrically or asymmetrically,
characterised in that
- the lubricating oil pockets (5) are arranged in the vicinity of the chain link plate tracks and are arranged offset from one another in the direction of movement (R) of the chain (2).

2. A chain guiding and slide rail according to claim 1,
characterised in that
the lubricating oil pockets (5) are formed as trapezoidal recesses of which the depth (T) and the width (B) decrease in the direction of running (R) of the chain (2).

## Revendications

1. Rail de guidage de chaînes et barre de glissière, notamment pour moteurs à combustion interne pour le guidage et la tension de chaînes, comme par exemple de dispositifs de commande par arbre à came, la barre de glissière (1) étant constituée d'un support métallique avec une couche de revêtement en un matériau synthétique ou entièrement en un matériau synthétique, et, dans la partie de l'appui de la chaîne (4), formant directement la surface de glissement, ou étant éventuellement munie d'un revêtement de glissement fait d'une autre matière synthétique, et la surface de la barre de glissement formant la surface d'appui de la chaîne (4) étant munie d'une multitude de poches à huile lubrifiante (5) placées symétriquement ou asymétriquement, **caractérisés en ce que** les poches à huile lubrifiante (5) sont placées dans la partie des trajectoires des maillons et placées de façon décalée les unes par rapport aux autres dans le sens de déplacement (R) de la chaîne (2).

2. Rail de guidage de chaînes et barre de glissière selon la revendication 1, **caractérisés en ce que** les poches à huile lubrifiante (5) sont formées comme des creux de forme trapézoïdale, dont la profondeur (T) et la largeur (B) sont placées dans le sens de déplacement (R) de la chaîne (2) de façon décroissante.
